# EUROPÄISCHE PATENTSCHRIFT

(11) **EP 2 732 542 B1**
(45) Veröffentlichungstag und Bekanntmachung des Hinweises auf die Patenterteilung: **07.03.2018**
(21) Anmeldenummer: 12746041.8
(22) Anmeldetag: 12.07.2012
(51) Int. Cl.: H02M 5/257, H02M 1/12

(54) **VERFAHREN ZUM BETRIEB VON MEHREREN VERBRAUCHERN IN WECHSELSTROMNETZEN MIT PHASENANSCHNITT ODER PHASENABSCHNITT**
METHOD OF OPERATING SEVERAL LOADS FED FROM AN AC GRID BY MEANS OF PHASE CONTROLLED CONVERTERS
MÉTHODE D'OPERATION DES PLUSIERS CHARGES ALIMENTÉES D'UN RESEAU C.A. AVEC DES CONVERTISSEURS COMMANDÉS EN ANGLE DE PHASE

(30) Priorität: 13.07.2011 DE 102011079053; 01.12.2011 DE 102011119932
(43) Veröffentlichungstag der Anmeldung: 21.05.2014
(73) Patentinhaber: Singulus Technologies AG, 63796 Kahl/Main (DE)
(72) Erfinder: BECKER, Wolfgang, 64850 Schaafheim (DE); RÜTH, Edgar, 63796 Kahl am Main (DE); KLEIN, Benedikt, 63768 Feldkahl (DE)
(74) Vertreter: Vossius & Partner Patentanwälte Rechtsanwälte mbB
(86) Internationale Anmeldenummer: PCT/EP2012/063672
(87) Internationale Veröffentlichungsnummer: WO 2013/007783

(56) Entgegenhaltungen:
- DE-A1- 10 021 918
- DE-A1- 19 719 913
- DE-A1- 19 802 711
- DE-U1- 9 314 747
- US-A- 3 854 033

## Beschreibung

Die vorliegende Erfindung betrifft eine Vorrichtung und ein Verfahren zum Betrieb von mehreren Verbrauchern in Wechselstromnetzen mit Phasenanschnitt oder Phasenabschnitt.

Insbesondere in Vorrichtungen zur Herstellung von Dünnschichtsolarzellen werden Heizprozesse mit großer Leistung gefordert, wobei zur Prozessoptimierung auch Steuerbereiche mit relativ kleiner Heizleistung ermöglicht werden sollen. Hierzu werden unter anderem Phasenanschnittsteuerungen eingesetzt, um Substrate, z.B. aus Glas, möglichst homogen aufzuheizen.

Nachteilig bei Phasenanschnittsteuerungen ist der nicht-sinusförmige Verlauf des Stroms, da der Strom nur in einem Teil der Halbwelle fließt. Je kleiner der erforderliche Strom, umso größer ist der Anschnittwinkel (z.B. 90° bis 180° entsprechend 50% bis 0%) und umso mehr weicht die Kurvenform des Stroms von der Sinusform ab. Dies führt zu Rückwirkungen in Form von Oberschwingungen auf das einspeisende Netz. Diese Rückwirkungen sind z.B. nach bestimmten Normwerken (z.B. EN61000-3-2, EN61000-3-12, EN61000-2-2, EN61000-2-4 und EN50160) zu begrenzen, da die von Oberschwingungsströmen in den Versorgungsnetzen hervorgerufenen Verluste dabei erheblich sein können.

Zur Reduzierung von Oberwellen schlägt die DE 197 05 907 A1 vor, dass eine Variation des Zündwinkels um den vorgegebenen Zündwinkelsollwert herum vorgenommen wird, um eine Leistungssteuerung von an ein Wechselspannungsversorgungsnetz angeschlossenen elektrischen Verbrauchern durch eine Phasenanschnittschaltung zu schaffen.
EP 1 529 335 B1 stellt eine Vorrichtung bereit, bei der ein zweites Schaltungselement früher leitend geschaltet wird und dadurch ein Strom fließt, der nach dem Zünden des eigentlichen ersten Schaltungselements von diesem übernommen wird. Hierdurch wird ein sanfterer Anstieg des Stroms insgesamt erreicht, so dass sich die Oberwellen dadurch reduzieren bzw. teilweise auslöschen sollen.
Die DE 10 2007 059 789 B3 schlägt vor, den Zündwinkel je Halbwelle der Wechselspannung in einer wiederkehrenden Sequenz derart zu wählen, dass die Leistung sinusförmig variiert, ohne dass das Gleichgewicht der Leistung zwischen positiven und negativen Halbwellen im Mittel aufgehoben wird. Somit sei es möglich, die erzeugten Oberwellen derart zu gestalten, dass sich diese im Mittel auslöschen können.

Die DE 100 21 918 A1 offenbart eine Phasenanschnitts-, bzw. Wellenpaketsteuerung für zwei oder mehr parallel betriebene AC Motoren.

Die DE 198 02 711 A1 offenbart eine solche Steuerung für zwei parallel betriebene Kollektormotoren, welche nacheinander mittels einer Phasenanschnittsteuerung auf volle Drehzahl hochgefahren werden. Zudem wird ein netzrückwirkungsarmer Dimmerbetrieb offenbart, worin die beiden Motoren jeweils mit den vollen positiven und negativen Halbwellen betrieben werden.

Der vorliegenden Erfindung liegt die Aufgabe zugrunde, eine Vorrichtung und ein Verfahren zur Reduzierung von Oberwellen bei Lastbetrieb mit Phasenanschnitt über einen größeren Leistungsregelbereich und auch bei relativ geringer Last bereitzustellen, um z.B. ein besonders gleichmäßiges Erwärmungsprofil für Glassubstrate zu erzielen. Hierfür sollen v.a. wirtschaftlich tragbare Maßnahmen zur Einhaltung der Grenzwerte aus den oben beschriebenen Regelwerken gefunden werden. Diese Aufgabe wird mit den Merkmalen der Patentansprüche gelöst.
Die Erfindung geht aus von dem Konzept einer üblichen Phasenanschnittsteuerung von zwei oder mehr Verbrauchern, bei dem jeder Verbraucher beide phasenanschnittgesteuerte Halbwellen nutzt (erster Betriebsmodus). Wie vorstehend dargelegt, sind bei kleinerer Last der Verbraucher die Störungen und Rückwirkungen auf das Netz groß, zumal sich die Einschaltphasen für die beiden Verbraucher überlagern. Erfindungsgemäß ist hierfür ein zweiter Betriebsmodus vorgesehen, in dem eine bestimme Anzahl aufeinanderfolgender Halbwellen nur für den ersten Verbraucher und die bestimmte Anzahl der dann folgenden Teilwellen nur für den zweiten Verbraucher usw. jeweils mit einem zweiten Phasenanschnittwinkel angesteuert werden.

Die Erfindung betrifft somit allgemein ein Verfahren mit einem ersten Betriebsmodus, in dem die positiven und negativen Halbwellen für jeden Verbraucher mit einem ersten Phasenanschnittwinkel bzw. mit einem ersten Phasenabschnittwinkel angesteuert werden, und einem zweiten Betriebsmodus, in dem ein erster Teil der positiven und negativen Halbwellen (nur) für den ersten Verbraucher und ein zweiter Teil der positiven und negativen Halbwellen (nur) für den zweiten Verbraucher jeweils mit einem zweiten Phasenanschnittwinkel bzw. mit einem zweiten Phasenabschnittwinkel angesteuert werden.

Der erste Teil der Halbwellen sind die positiven Halbwellen und der zweite Teil der Halbwellen sind die negativen Halbwellen.
In einer solchen Ausführungsform kann die Erfindung ein Verfahren in einem Wechselstromnetz betreffen, bei dem ein erster und ein zweiter elektrischer Verbraucher im Lastbetrieb von 0% bis 50% betrieben werden sollen. Hier können die negativen Halbwellen für den ersten Verbraucher und die positiven Halbwellen für den zweiten Verbraucher abgeschaltet und die positiven Halbwellen für den ersten Verbraucher und die negativen Halbwellen für den zweiten Verbraucher (z.B. mit einem zweiten Phasenanschnittwinkel) angeschaltet werden, also die negativen Halbwellen werden nur für den einen Verbraucher und die positiven Halbwellen nur für den anderen Verbraucher genutzt.
Das erfindungsgemäße Verfahren zum Betrieb eines ersten und eines zweiten elektrischen Verbrauchers in einem Wechselstromnetz kann einen ersten Betriebsmodus vorsehen, in dem die positiven und negativen Halbwellen für jeden Verbraucher mit einem ersten Phasenanschnittwinkel angesteuert werden. Zudem kann, falls der erste Phasenanschnittwinkel mindestens 90° beträgt, in einen zweiten Betriebsmodus umgeschaltet werden durch Abschalten der negativen Halbwellen für den ersten Verbraucher und der positiven Halbwellen für den zweiten Verbraucher und Ansteuern der positiven Halbwellen für den ersten Verbraucher und der negativen Halbwellen für den zweiten Verbraucher mit einem zweiten Phasenanschnittwinkel.
So kann z.B., falls die Last relativ gering ist und der Phasenanschnittwinkel bei diesem bekannten Konzept (erster Phasenanschnittwinkel) im Bereich von 90° bis 180°, also die Belastung jeder Halbwelle im Bereich von 50% bis 0% liegt, ein anderer Betriebsmodus aktiviert werden, bei dem der eine Verbraucher nur die positiven Halbwellen und der andere Verbraucher nur die negativen Halbwellen nutzt.
Dadurch kann auch bei relativ geringer Leistungsaufnahme der Verbraucher der Phasenanschnittwinkel (= zweiter Phasenanschnittwinkel) der beiden Halbwellen und damit die Abweichung der Stromkurve von der Sinusform gegenüber der bekannten Lösung (mit dem ersten Phasenanschnittwinkel) verkleinert werden, so dass die Rückwirkungen auf das Netz in Form von Oberwellen verringert werden.

Die Erfindung betrifft auch eine Vorrichtung, die geeignet ist oben beschriebenes allgemeines Konzept der Erfindung durchzuführen. Die Vorrichtung umfasst hierbei insbesondere eine erste und eine zweite Phasenanschnittsteuerung (oder mehr als zwei Phasenanschnittsteuerungen) für einen ersten und einen zweiten (oder mehr als zwei) Verbraucher. Die erste Phasenanschnittsteuerung ist geeignet, für den ersten Verbraucher einen ersten Teil der positiven und negativen Halbwellen anzusteuern, und die zweite Phasenanschnittsteuerung ist geeignet, für den zweiten Verbraucher einen zweiten Teil der positiven und negativen Halbwellen anzusteuern. Die Phasenanschnittsteuerungen sind geeignet, die Halbwellen mit einem zweiten Phasenanschnittwinkel bzw. mit einem zweiten Phasenabschnittwinkel anzusteuern, z.B. wenn für den oben beschriebenen ersten Betriebsmodus ein erster Phasenanschnittwinkel bzw. eine erster Phasenabschnittwinkel vorgesehen ist.

Der erste Teil der Halbwellen sind die positiven Halbwellen und der zweite Teil der Halbwellen sind die negativen Halbwellen.

In solch einer Ausführungsform kann die Erfindung auch eine Vorrichtung zum Betrieb von elektrischen Verbrauchern in einem Wechselstromnetz mit einem ersten Phasenanschnittwinkel von mindestens 90° betreffen, insbesondere eine Vorrichtung zur Durchführung eines der oben und/oder unten definierten Verfahrens.

Die Vorrichtung umfasst eine erste und eine zweite Phasenanschnittsteuerung für einen ersten und einen zweiten (elektrischen) Verbraucher, wobei die erste Phasenanschnittsteuerung dazu eingereichtet ist, für den ersten Verbraucher die negativen Halbwellen abzuschalten, und wobei die zweite Phasenanschnittsteuerung dazu eingereichtet ist, für den zweiten Verbraucher die positiven Halbwellen abzuschalten. Die Phasenanschnittsteuerungen sind zudem vorzugsweise geeignet, die positiven Halbwellen für den ersten Verbraucher und die negativen Halbwellen für den zweiten Verbraucher mit einem zweiten Phasenanschnittwinkel anzusteuern.

In einer Ausführungsform umfassen die elektrischen Verbraucher Lampen, wie IR-Strahler für Heizprozesse zum Herstellen von Dünnschichtsolarzellen.
Eine Phasenanschnittsteuerung kann den Stromfluss in einem Wechselstromnetz derart steuern, dass nach dem Nulldurchgang der Wechselspannung der Strom so lange nicht zu dem Verbraucher fließt, bis die Steuerung einen Zündimpuls erhält. Bei dieser Phase des Wechselstromsignals, der ein bestimmter Phasenanschnittwinkel zugeordnet werden kann, wird der angeschlossene Verbraucher bis zum nächsten Nulldurchgang mit Strom versorgt. Die Dauer vom Nulldurchgang bis zum Zündimpuls wird hierbei als Phasenanschnitt bezeichnet, wobei mit größerer Dauer (kleinerem Phasenanschnitt, z.B. zwischen 0% und 50%, und größerem Phasenanschnittwinkel, z.B. 180° und 90°) die Leistung geringer wird. Anders ausgedrückt, beträgt ein Phasenanschnitt 100% liegt keine Verzögerung des Zündimpulses vor (Phasenanschnittwinkel von 0°), während ein Phasenanschnitt von 0% der maximalen Verzögerung bis zum Nulldurchgang entspricht (Phasenanschnittwinkel von 180°).

Gemäß der Erfindung werden die negativen bzw. positiven (Sinus-)Halbwellen des Netzstroms für den ersten und zweiten Verbraucher abgeschaltet und diese mit einem anderen, für die Verbraucher untereinander gleichen zweiten Phasenanschnittwinkel angesteuert als für den Fall, dass die Halbwellen nicht abgeschaltet werden. Dadurch ist es möglich, trotz Abschaltung bestimmter Halbwellen, die Leistung für die beiden Verbraucher im Vergleich zu dem Fall ohne Abschaltung der Halbwellen beizubehalten. Zudem kann durch das Abschalten bestimmter Halbwellen eine konstruktive Überlagerung der Belastung durch den ersten und den zweiten Verbraucher verhindert werden.
In einer Ausführungsform des Verfahrens und der Vorrichtung ist der zweite Phasenanschnittwinkel (bei nur positiven oder nur negativen Halbwellen für einen Verbraucher) kleiner als der erste Phasenanschnittwinkel (bei Nutzung sowohl der positiven als auch der negativen Halbwellen für jeden Verbraucher). Durch das Abschalten bestimmter Halbwellen kann also der zweite Phasenanschnitt gegenüber dem ersten Phasenanschnitt verkürzt werden, um die gleiche Leistung (im Vergleich zu dem Fall ohne Abschalten der Halbwellen) zu erreichen.
Dadurch kann die Leistung bei abgeschalteten Halbwellen an die Leistung ohne Abschaltung der Halbwellen angepasst werden, insbesondere kann das Abschalten der Halbwellen so kompensiert werden.
In einer Ausführungsform des Verfahrens und der Vorrichtung ist der erste Phasenanschnitt doppelt so groß wie der zweite Phasenanschnitt. Je größer der Phasenanschnitt, desto länger ist die Verzögerung, bis ein Verbraucher mit Energie versorgt werden kann, und desto kleiner ist somit die Leistung. Um einen Leistungsverlust durch Abschalten der Halbwellen zu kompensieren, kann z.B. die Verzögerung bis zum Stromfluss, also der Phasenanschnitt, auf die Hälfte reduziert werden zur Ansteuerung der nicht abgeschalteten Halbwellen. Per Definition sind die Verbraucher derart synchronisiert, dass sich die angesteuerten positiven und negativen Halbwellen nicht konstruktiv und/oder destruktiv überlagern. Auf diese Weise kann verhindert werden, dass sich die Belastungsamplituden für das Stromnetz auch nur teilweise addieren. Die oben beschriebenen Verfahrensschritte stellen den zweiten Betriebsmodus dar, bei dem der eine Verbraucher nur die positiven oder nur die negativen Halbwellen nutzt und der andere Verbraucher nur die anderen (entweder nur die negativen oder nur die positiven) Halbwellen nutzt. Zudem kann das Verfahren von dem zweiten in den ersten Betriebsmodus (insbesondere automatisch) umschalten. Im ersten Betriebsmodus nutzt jeder Verbraucher sowohl die positiven als auch die negativen Halbwellen. Ein Umschalten von dem zweiten in den ersten Betriebsmodus ist jederzeit möglich, wird jedoch dann notwendig, wenn im zweiten Betriebsmodus bei Verringerung des Phasenanschnittwinkels bis 0° eine weitere Erhöhung des Lastbereichs erforderlich wird.
Somit können die elektrischen Verbraucher in dem ersten Betriebsmodus derart betrieben werden, dass positive und negative Halbwellen sowohl für den ersten, als auch für den zweiten Verbraucher angesteuert werden. In diesem zweiten Betriebsmodus findet somit keine Abschaltung bestimmter Halbwellen statt, so dass durch die Kombination der beiden Betriebsmodi ein größerer Leistungsregelbereich bereitgestellt wird.
Dementsprechend kann auch die oben beschriebene, erfindungsgemäße Vorrichtung und ihre Ausführungsformen eingerichtet sein, diesen ersten Betriebsmodus durchzuführen. Ferner sind Mittel zum Umschalten zwischen dem ersten und dem zweiten Betriebsmodus und/oder umgekehrt vorgesehen, so dass aus dem ersten Betriebsmodus, bei dem beide Verbraucher beide Halbwellen nutzen und festgestellt wird, dass der Phasenanschnittwinkel im Bereich von 180° bis 90°, vorzugsweise in einem Bereich von weniger als 180° und mehr als 90°, liegt, in einen zweiten Betriebsmodus umgeschaltet wird, in dem der eine Verbraucher nur die eine Halbwelle und der andere Verbraucher nur die andere Halbwelle nutzt, und beim Umschalten der Phasenanschnittwinkel so verkleinert wird, dass der Wegfall der Halbwelle für den jeweiligen Verbraucher bezüglich der Leistung kompensiert wird, und/oder so dass aus dem zweiten Betriebsmodus, bei dem festgestellt wird, dass der Phasenanschnittwinkel gegen 0° geht oder 0° beträgt, in den ersten Betriebsmodus umgeschaltet wird, und beim Umschalten der Phasenanschnittwinkel so vergrößert wird, dass die Zuschaltung der Halbwelle für die beiden Verbraucher bezüglich der Leistung kompensiert wird.
Im Rahmen der Erfindung können auch mehr als zwei Verbraucher eingesetzt werden. In diesem Fall werden die Verbraucher zum Beispiel in zwei Verbrauchergruppen eingeteilt, deren Netzbelastung möglichst gleich oder annähernd gleich sein kann. Die beiden Verbrauchergruppen können dann wie die vorstehend beschriebenen zwei Verbraucher erfindungsgemäß betrieben werden.

Das erfindungsgemäße Prinzip kann entsprechend auch bei einer Phasenabschnittsteuerung eingesetzt werden, bei der der Strom zwischen dem Nulldurchgang und dem Zündimpuls fließt.

Die Erfindung wird nachstehend mit Bezug auf die Zeichnungen näher erläutert. Es zeigen:
Fig. 1 eine schematische Darstellung einer Beispielschaltung,
Fig. 2(a) die Netzbelastung durch einen ersten Verbraucher mit einem ersten Phasenanschnitt von 35%,
Fig. 2(b) die Netzbelastung durch einen zweiten Verbraucher mit einem ersten Phasenanschnitt von 35%,
Fig. 2(c) die Gesamt-Netzbelastung durch die beiden Verbraucher aus Fig. 2(a) und Fig. 2(b).
Fig. 3(a) die Netzbelastung durch einen ersten Verbraucher mit einem Phasenanschnitt von 70% mit ausgeschalteter negativen Halbwelle,
Fig. 3(b) die Netzbelastung durch einen zweiten Verbraucher mit einem Phasenanschnitt von 70% mit ausgeschalteter positiven Halbwelle,
Fig. 3(c) die Gesamt-Netzbelastung durch die beiden Verbraucher aus Fig. 3(a) und Fig. 3(b).
Fig. 4 die Gesamt-Netzbelastung aus Fig. 3(c) im Vergleich mit der Gesamt-Netzbelastung aus Fig. 2(c),
Fig. 5 die Gesamt-Netzbelastung durch zwei Verbraucher mit einem Phasenanschnitt von 40% mit ausgeschalteten negativen bzw. positiven Halbwellen im Vergleich mit der Gesamt-Netzbelastung durch zwei Verbraucher mit 20% Phasenanschnitt und ohne Ausschaltung der jeweiligen Halbwellen,
Fig. 6 die Gesamt-Netzbelastung durch zwei Verbraucher mit einem Phasenanschnitt von 98% mit ausgeschalteten negativen bzw. positiven Halbwellen im Vergleich mit der Gesamt-Netzbelastung durch zwei Verbraucher mit 49% Phasenanschnitt und ohne Ausschaltung der jeweiligen Halbwellen, und
Fig. 7 das Verhältnis der Amplituden der Oberwellen für einen Phasenanschnitt von 35% wie in Fig. 2(c) und für einen Phasenanschnitt von 70% mit abgeschalteten Halbwellen wie aus Fig. 3(c) aus Fouriertransformation.

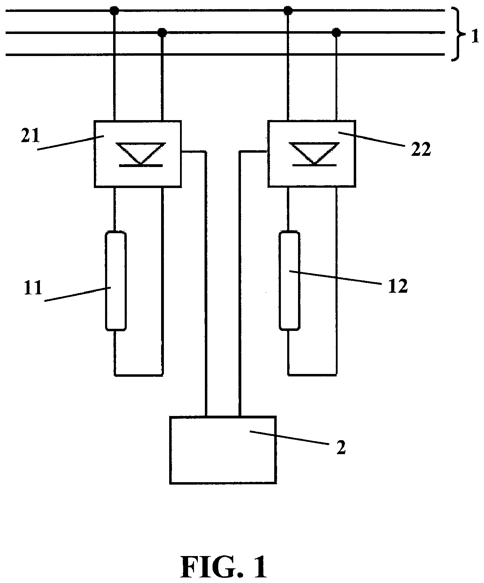

Fig. 1 zeigt eine Beispielschaltung für eine Vorrichtung mit zwei Verbrauchern 11, 12 und zwei Phasenanschnittsteuerungen (Steller) 21, 22 zur Regelung des Stromflusses and einem Wechselstromnetz 1. Die Phasenanschnittsteuerung verzögert nach dem Nulldurchgang des Wechselstroms den Stromfluss und schaltet diesen bei einem bestimmten Phasenanschnittwinkel ein ("Ansteuern"), so dass der Strom bis zum nächsten Nulldurchgang fließt. Die Ansteuerung erfolgt mit Hilfe der Steuerschaltung 2. Ein (inverses) Maß für die Dauer der Verzögerung des Stromflusses ist der Phasenanschnitt, er ist groß bei kleinen Phasenanschnittwinkeln und klein bei großen Phasenanschnittwinkeln. Die Verbraucher 11, 12 sind parallel geschaltet und können aus dem Wechselstromnetz 1 betrieben werden. Der erste Verbraucher 11 wird von der ersten Phasenanschnittsteuerung 21 angesteuert, während die zweite Phasenanschnittsteuerung 22 den zweiten Verbraucher 12 ansteuert. Die Phasenanschnittsteuerungen 21, 22 können mit Hilfe der Steuerschaltung 2 die negative bzw. positive Halbwelle der Netzphase für den ersten bzw. zweiten Verbraucher 11, 12 abschalten und sind vorzugsweise derart konfiguriert, dass sie die nicht abgeschalteten Halbwellen mit dem gleichen Phasenanschnittwinkel ansteuern.

Beispielsweise sollen im Lastbetrieb die Verbraucher 11, 12, z.B. Lampen wie IR-Strahler für Heizprozesse bei der Herstellung von Dünnschichtsolarzellen, mit einem ersten Phasenanschnittwinkel von mindestens 90° betrieben werden. Hierzu schlägt die vorliegende Erfindung vor, dass die Vorrichtung, insbesondere z.B. die erste Phasenanschnittsteuerung 21, für den ersten Verbraucher 11 die negativen Halbwellen der Netzphase abschaltet und die positiven Halbwellen, die nicht abgeschaltet werden, mit einem anderen (zweiten) Phasenanschnittwinkel, der vorzugsweise kleiner ist als der erste Phasenanschnittwinkel, insbesondere halb so klein ist wie der erste Phasenanschnittwinkel, ansteuert. Für den zweiten Verbraucher 12 schaltet die Vorrichtung, z.B. die zweite Phasenanschnittsteuerung 22, die positiven Halbwellen der Netzphase ab und steuert die verbleibenden, nicht ausgeschalteten, negativen Halbwellen mit dem zweiten Phasenanschnittwinkel an, insbesondere mit dem gleichen Phasenanschnittwinkel wie im Zusammenhang mit dem ersten Verbraucher 11 beschrieben.

Auf diese Weise kann verhindert werden, dass sich die Netzbelastungen durch die Verbraucher 11, 12 konstruktiv überlagern, und Oberwellen können reduziert und somit Blindleistungen entsprechend verhindert werden, da - bei gleicher Leistungsabgabe - der zweite Phasenanschnittwinkel bei Abschaltung der Halbwellen kleiner ist als der erste Phasenanschnittwinkel bei Nutzung beider Halbwellen für beide Verbraucher.

Im Folgenden werden Beispiele für bestimmte Phasenanschnitte jeweils mit abgeschalteten Halbwellen und ohne Abschaltung der Halbwellen miteinander verglichen.

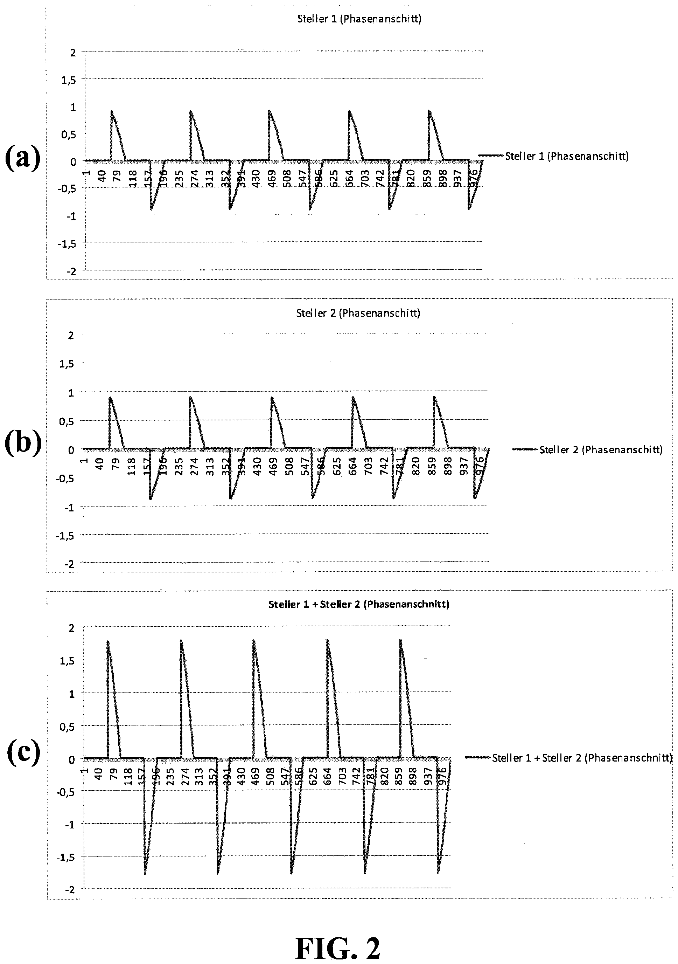

Fig. 2(a) und Fig. 2(b) zeigt die Netzbelastung durch einen ersten und zweiten Verbraucher mit einem Phasenanschnitt von 35% ohne Abschaltung der Halbwellen. In Fig. 2(c) ist die Gesamt-Netzbelastung durch diese beiden Verbraucher dargestellt, die sich aus der Überlagerung der Kurven aus Fig. 2(a) und Fig. 2(b) ergibt. Die Amplitude der Gesamt-Netzbelastung verdoppelt sich demnach bei konstruktiver Überlagerung der Kurven der beiden Verbraucher.

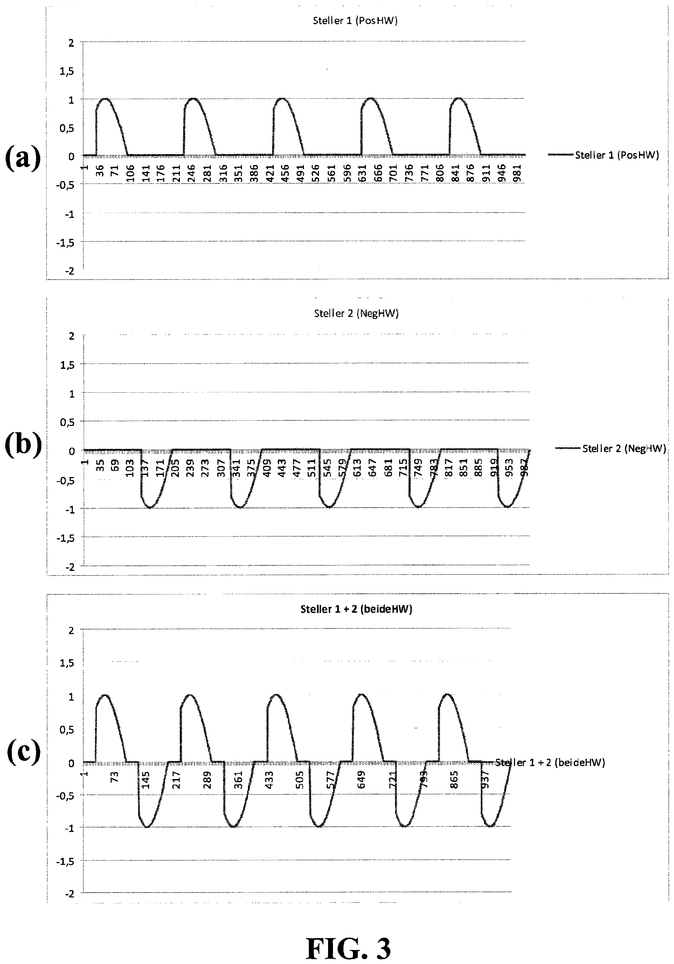

Fig. 3(a) stellt nun die Netzbelastung durch einen ersten Verbraucher mit einem Phasenanschnitt von 70% dar, dessen negative Halbwellen ausgeschaltet wurden. Im Vergleich zu dem Phasenanschnittwinkel von 35%, die dem Kurvenverlauf von Fig. 2(a) entspricht, wurde hier der doppelte Phasenanschnitt angesteuert, um die gleiche Leistung zu erhalten.

Analog zu Fig. 3(a) stellt Fig. 3(b) die Netzbelastung durch einen zweiten Verbraucher mit einem Phasenanschnitt von 70% dar. Im Unterschied zu Fig. 3(a) wurden hier die positiven Halbwellen (HW) abgeschaltet, so dass nur die negativen Halbwellen (HW) mit der gleichen doppelten Prozentzahl wie in Fig. 3(a), also mit 70%, angesteuert wurden.

Eine Betrachtung der Gesamtbelastung aus den beiden Kurven aus Fig. 3(a) und Fig. 3(b) ergibt, dass sich die Netzbelastungen der beiden Verbraucher nicht konstruktiv überlagern, siehe Fig. 3(c).

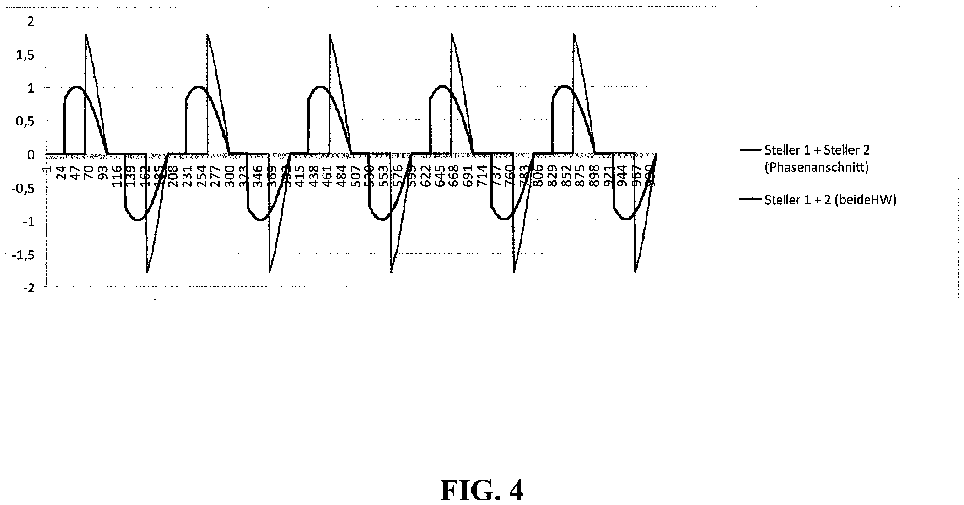

Ein Vergleich der Gesamt-Netzbelastung aus Fig. 2(c) (ohne Abschalten der Halbwellen) mit der Gesamt-Netzbelastung aus Fig. 3(c) (mit Abschaltung der Halbwellen und doppeltem Phasenanschnitt) ergibt in Fig. 4, dass die Netzbelastungsamplituden und die Abweichung der Kurvenform des Stroms von der Sinusform bei gleicher Leistung in dem Fall ohne Ausschalten von Halbwellen deutlich größer sind als in dem Fall mit Ausschalten der entsprechenden Halbwellen.

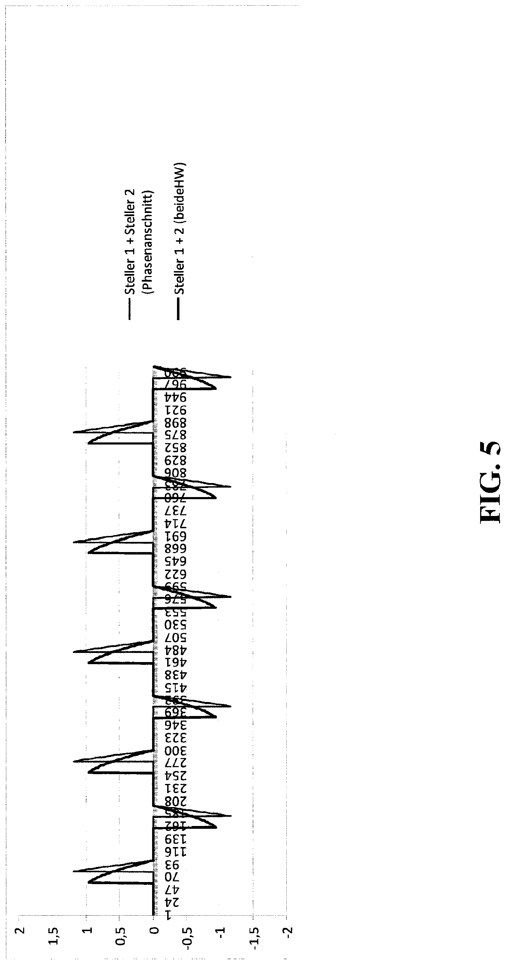

Fig. 5 zeigt ein weiteres Beispiel für die Reduktion der Amplituden der Gesamt-Netzbelastung durch zwei Verbraucher. Die Kurve "Steller 1 + Steller 2" zeigt die Belastung durch zwei Verbraucher mit einem Phasenanschnitt von 20%, wobei die Kurve "Steller 1 + 2 (beide HW)" die Belastung durch zwei Verbraucher mit abgeschalteten negativen bzw. positiven Halbwellen und einem Phasenanschnitt von 40% darstellt. Auch hier wird deutlich, dass die Amplitude und die Abweichung der Stromkurve von der Sinusform bei abgeschalteten Halbwellen und größerem Phasenanschnitt (und damit gleicher Leistung wie ohne Abschaltung der Halbwellen) kleiner ist als ohne Abschaltung.

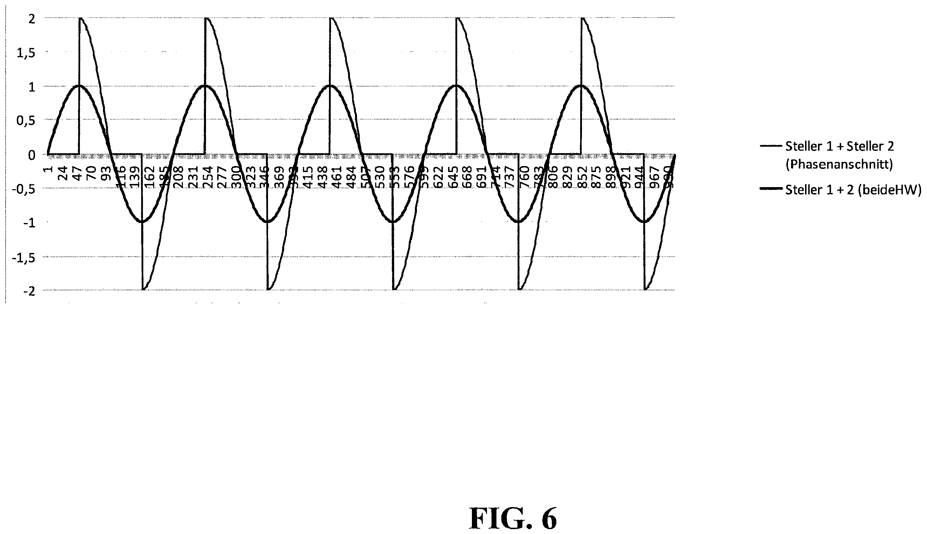

Fig. 6 gibt die entsprechenden Ergebnisse für eine Gesamt-Netzbelastung durch zwei Verbraucher mit 49% Phasenanschnitt im Vergleich zu der Gesamt-Netzbelastung durch zwei Verbraucher mit einem Phasenanschnitt von 98% mit ausgeschalteten negativen bzw. positiven Halbwellen wieder.

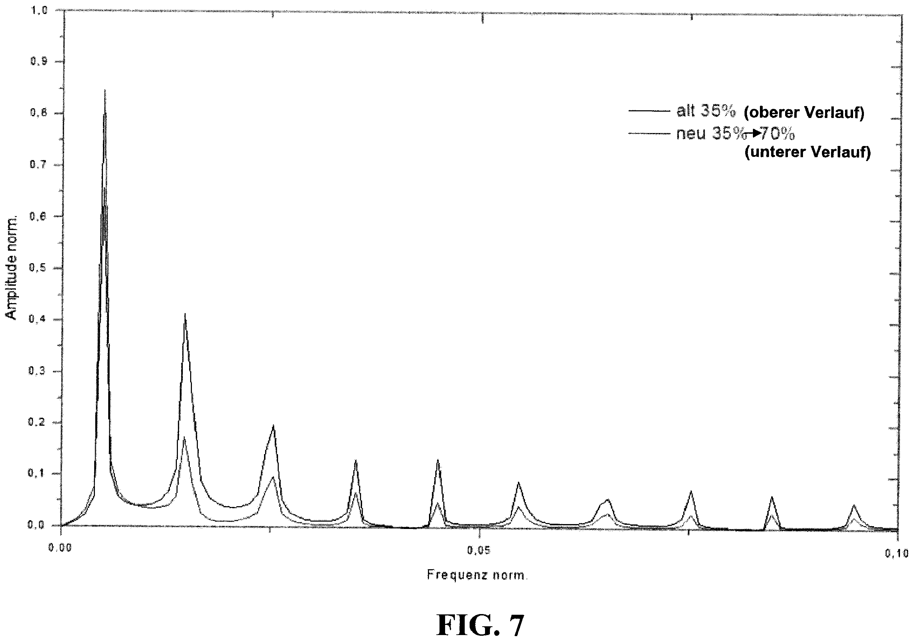

Eine Betrachtung der Oberwellen durch eine Fouriertransformation ist in Fig. 7 dargestellt. Hieraus ergibt sich anhand des Beispiels für einen Phasenanschnitt von 35% wie in Fig. 2(c) und für einen Phasenanschnitt von 70% mit abgeschalteten Halbwellen wie aus Fig. 3(c), dass das Verhältnis der Amplituden der Oberwellen bei Abschaltung der negativen bzw. positiven Halbwellen und vergrößertem Phasenanschnitt tatsächlich geringer ist.

Auf diese Weise können somit die Belastungen der Versorgungsnetze auch bei Anlagen mit hohen Lastströmen, die durch Phasenanschnitt gesteuert werden, reduziert werden. Durch die oben beschriebene Reduzierung der Oberwellen kann Blindleistung verhindert werden, so dass sich beim Einsatz obigen Verfahrens bzw. der entsprechenden Vorrichtung ein enormes Einsparpotential bei der Auslegung einer Blindleistungskompensationsanlage und somit bei den Energiekosten ergeben kann.

## Patentansprüche

1. Verfahren zum Betrieb eines ersten (11) und eines zweiten (12) elektrischen Verbrauchers in einem Wechselstromnetz, mit:
einem ersten Betriebsmodus, in dem die positiven und negativen Halbwellen für jeden Verbraucher (11; 12) mit einem ersten Phasenanschnittwinkel oder einem ersten Phasenabschnittwinkel angesteuert werden, und
einem zweiten Betriebsmodus, in dem ein erster Teil der positiven und negativen Halbwellen für den ersten Verbraucher (11) und ein zweiter Teil der positiven und der negativen Halbwellen für den zweiten Verbraucher jeweils mit einem zweiten Phasenanschnittwinkel bzw. einem zweiten Phasenabschnittwinkel angesteuert werden,
Umschalten von dem ersten in den zweiten Betriebsmodus, falls der erste Phasenanschnittwinkel mindestens 90° beträgt bzw. der erste Phasenabschnittwinkel kleiner oder gleich 90° ist, und
Umschalten von dem zweiten in den ersten Betriebsmodus, falls der zweite Phasenanschnittwinkel gegen 0° geht bzw. der zweite Phasenabschnittwinkel gegen 180° geht,
wobei der zweite Phasenanschnittwinkel nach dem Umschalten von dem ersten in den zweiten Betriebsmodus kleiner als der erste Phasenanschnittwinkel vor dem Umschalten von dem ersten in den zweiten Betriebsmodus ist bzw. der zweite Phasenabschnittwinkel nach dem Umschalten von dem ersten in den zweiten Betriebsmodus größer als der erste Phasenabschnittwinkel vor dem Umschalten von dem ersten in den zweiten Betriebsmodus ist, um nach dem Umschalten im zweiten Betriebsmodus die gleiche Leistung zu erreichen wie vor dem Umschalten im ersten Betriebsmodus und
wobei der erste Teil der Halbwellen die positive Halbwellen und der zweite Teil der Halbwellen die negativen Halbwellen sind.

2. Verfahren nach Anspruch 1, wobei der zweite Phasenanschnittwinkel bzw. der zweite Phasenabschnittwinkel für jeden Verbraucher gleich ist.

3. Verfahren nach einem der vorhergehenden Ansprüche, wobei das Verfahren zur Steuerung von elektrischen Heizleistungen eingesetzt wird.

4. Vorrichtung zum Betrieb von elektrischen Verbrauchern in einem Wechselstromnetz mit einem ersten Phasenanschnittwinkel von mindestens 90° bzw. einem ersten Phasenabschnittwinkel kleiner oder gleich 90°, mit
einer ersten (21) und einer zweiten (22) Phasenanschnittsteuerung bzw. einer ersten und einer zweiten Phasenabschnittsteuerung für einen ersten (11) und einen zweiten (12) Verbraucher,
wobei die erste Phasenanschnittsteuerung (21) bzw. die erste Phasenabschnittsteuerung eingerichtet ist, für den ersten Verbraucher (11) einen ersten Teil der positiven und negativen Halbwellen anzusteuern,
wobei die zweite Phasenanschnittsteuerung (22) bzw. die zweite Phasenabschnittsteuerung eingerichtet ist, für den zweiten Verbraucher (12) einen zweiten Teil der positiven und negativen Halbwellen anzusteuern,
wobei die Phasenanschnittsteuerungen (21, 22) bzw. die Phasenabschnittsteuerungen eingerichtet sind, die Halbwellen mit einem zweiten Phasenanschnittwinkel bzw. einem zweiten Phasenabschnitt anzusteuern, und
wobei die Vorrichtung eingerichtet ist, die elektrischen Verbraucher (11, 12) in einem Betriebsmodus zu betreiben, in dem die positiven und negativen Halbwellen sowohl für den ersten (11) als auch für den zweiten (12) Verbraucher angesteuert werden,
von einem ersten Betriebsmodus, in dem die positiven und negativen Halbwellen sowohl für den ersten (11), als auch für den zweiten (12) Verbraucher angesteuert werden, in einen zweiten Betriebsmodus umzuschalten, in dem die negativen Halbwellen für den ersten Verbraucher (11) und die positiven Halbwellen für den zweiten Verbraucher (12) abgeschaltet werden, falls der erste Phasenanschnittwinkel mindestens 90° beträgt bzw. der erste Phasenabschnittwinkel kleiner oder gleich 90° ist, und beim Umschalten den Phasenanschnittwinkel von dem ersten Phasenanschnittwinkel zu dem zweiten Phasenanschnittwinkel so zu verkleinern bzw. den Phasenabschnittwinkel von dem ersten Phasenabschnittwinkel zu dem zweiten Phasenabschnittwinkel so zu vergrößern, dass der Wegfall der Halbwelle für den jeweiligen Verbraucher bezüglich der Leistung kompensiert wird.

5. Vorrichtung nach Anspruch 4, wobei die Phasenanschnittsteuerungen (21, 22) bzw. die Phasenabschnittsteuerungen eingerichtet sind, die Halbwellen für die Verbraucher (11, 12) mit dem gleichen zweiten Phasenanschnittwinkel bzw. dem gleichen zweiten Phasenabschnittwinkel anzusteuern.

## Claims

1. A method of operating a first (11) and a second (12) electrical consumer in an AC network, comprising:
a first operating mode, in which the positive and negative half waves for each consumer (11; 12) are controlled with a first leading edge phase angle or a first trailing edge phase angle, and
a second operating mode, in which a first part of the positive and negative half waves for the first consumer (11) and a second part of the positive and the negative half waves for the second consumer is controlled in each case with a second leading edge phase angle or a second trailing edge phase angle, respectively,
switching from the first into the second operating mode if the first leading edge phase angle is at least 90° or if the first trailing edge phase angle is smaller than or equal to 90°, and
switching from the second into the first operating mode if the second leading edge phase angle approaches 0° or if the second trailing edge phase angle approaches 180°,
wherein, after switching from the first operating mode into the second operating mode, the second leading edge phase angle is smaller than the first leading edge phase angle before switching from the first operating mode into the second operating mode or, after switching from the first into the second operating mode, the second trailing edge phase angle is greater than the first trailing edge phase angle before switching from the first into the second operating mode in order to achieve the same power after switching into the second operating mode as achieved in the first operating mode before switching, and
wherein the first part of the half waves are the positive half waves and the second part of the half waves are the negative half waves.

2. The method according to claim 1, wherein the second leading edge phase angle or the second trailing edge phase angle is equal for each consumer.

3. The method according to any one of the preceding claims, wherein the method is used for controlling electrical heating power.

4. A device for operating electrical consumers in an AC network with a first leading edge phase angle of at least 90° or a first trailing edge phase angle smaller than or equal to 90°, comprising
a first (21) and a second (22) leading edge phase-angle control means or a first and a second trailing edge phase-angle control means for a first (11) and a second (12) consumer,
wherein the first leading edge phase-angle control means (21) or the first trailing edge phase-angle control means is configured for controlling a first part of the positive and negative half waves for the first consumer (11),
wherein the second leading edge phase-angle control means (22) or the second trailing edge phase-angle control means is configured for controlling a second part of the positive and negative half waves for the second consumer (12),
wherein the leading edge phase-angle control means (21, 22) or the trailing edge phase-angle control means are configured for controlling the half waves with a second leading edge phase angle or a second trailing edge phase angle, and
wherein the device is configured for operating the electrical consumers (11, 12) in an operating mode in which the positive and negative half waves are controlled for both the first (11) and for the second (12) consumer,
for switching between a first operating mode, in which the positive and negative half waves are controlled for both the first (11) and the second (12) consumer, and a second operating mode, in which the negative half waves are switched-off for the first consumer (11) and the positive half waves are switched-off for the second consumer (12), if the first leading edge phase angle is at least 90° or if the first trailing edge phase angle is smaller than or equal to 90°, and
when switching, for reducing the leading edge phase angle from first leading edge phase angle to the second leading edge phase angle or increasing the trailing edge phase angle from the first trailing edge phase angle to the second trailing edge phase angle in such a manner that switching-off of the half wave is compensated with respect to the power for the respective consumer.

5. The device according to claim 4, wherein the leading edge phase-angle control means (21, 22) or the trailing edge phase-angle control means are configured for controlling the half waves for the consumers (11, 12) with the same second leading edge phase angle or the same second trailing edge phase angle.

## Revendications

1. Procédé de fonctionnement d'un premier (11) et d'un deuxième (12) récepteurs électriques dans un réseau à courant alternatif, avec :
un premier mode de service, où les demi-ondes positives et négatives pour chaque récepteur (11 ; 12) sont commandées avec un premier angle de redressement à l'entrée de phase ou un premier angle de coupure de phase, et
un deuxième mode de service, où une première partie des demi-ondes positives et négatives pour le premier récepteur (11) et une deuxième partie des demi-ondes positives et négatives pour le deuxième récepteur sont respectivement commandées avec un deuxième angle de redressement à l'entrée de phase ou un deuxième angle de coupure de phase,
commutation du premier au deuxième mode de service, si le premier angle de redressement à l'entrée de phase est d'au moins 90° ou le premier angle de coupure de phase est inférieur ou égal à 90°, et
commutation du deuxième au premier mode de service, si le deuxième angle de redressement à l'entrée de phase va vers 0° ou le deuxième angle de coupure de phase va vers 180°,
le deuxième angle de redressement à l'entrée de phase étant après commutation du premier au deuxième mode de service inférieur au premier angle de redressement à l'entrée de phase avant commutation du premier au deuxième mode de service, ou le deuxième angle de coupure de phase étant après commutation du premier au deuxième mode de service supérieur au premier angle de coupure de phase avant commutation du premier au deuxième mode de service, pour atteindre après commutation dans le deuxième mode de service la même puissance qu'avant commutation dans le premier mode de service, et
la première partie des demi-ondes étant constituée des demi-ondes positives et la deuxième partie des demi-ondes étant constituée des demi-ondes négatives.

2. Procédé selon la revendication 1, où le deuxième angle de redressement à l'entrée de phase ou le deuxième angle de coupure de phase est le même pour chaque récepteur.

3. Procédé selon l'une des revendications précédentes, où le procédé est mis en oeuvre pour la commande de puissances de chauffe électriques.

4. Dispositif de fonctionnement de récepteurs électriques dans un réseau à courant alternatif avec un premier angle de redressement à l'entrée de phase d'au moins 90° ou un premier angle de coupure de phase inférieur ou égal à 90°, avec une première (21) et une deuxième (22) commandes de redressement à l'entrée de phase ou une première et une deuxième commandes de coupure de phase pour un premier (11) et un deuxième (12) récepteur,
où la première commande de redressement à l'entrée de phase (21) ou la première commande de coupure de phase sont prévues pour commander une première partie des demi-ondes positives et négatives pour le premier récepteur (11),
où la deuxième commande de redressement à l'entrée de phase (22) ou la deuxième commande de coupure de phase sont prévues pour commander une deuxième partie des demi-ondes positives et négatives pour le deuxième récepteur (12),
où les commandes de redressement à l'entrée de phase (21, 22) ou les commandes de coupure de phase sont prévues pour commander les demi-ondes avec un deuxième angle de redressement à l'entrée de phase ou une deuxième coupure de phase, et
où le dispositif est prévu
pour mettre en service les récepteurs électriques (11, 12) dans un mode de service où les demi-ondes positives et négatives sont commandées tant pour le premier (11) que pour le deuxième (12) récepteur,
pour commuter d'un premier mode de service, où les demi-ondes positives et négatives sont commandées tant pour le premier (11) que pour le deuxième (12) récepteur, vers un deuxième mode de service où les demi-ondes négatives pour le premier récepteur (11) et les demi-ondes positives pour le deuxième récepteur (12) sont désactivées si le premier angle de redressement à l'entrée de phase est d'au moins 90° ou le premier angle de coupure de phase est inférieur ou égal à 90°, et
lors de la commutation, pour réduire l'angle de redressement à l'entrée de phase du premier angle de redressement à l'entrée de phase vers le deuxième angle de redressement à l'entrée de phase, ou agrandir l'angle de coupure de phase du premier angle de coupure de phase vers le deuxième angle de coupure de phase, de manière à compenser la coupure de demi-onde pour chaque récepteur en matière de puissance.

5. Dispositif selon la revendication 4, où les commandes de redressement à l'entrée de phase (21, 22) ou les commandes de coupure de phase sont prévues pour commander les demi-ondes pour les récepteurs (11, 12) avec le même deuxième angle de redressement à l'entrée de phase ou le même deuxième angle de coupure de phase.
